# EUROPÄISCHE PATENTSCHRIFT

(11) **EP 0 991 342 B1**
(45) Veröffentlichungstag und Bekanntmachung des Hinweises auf die Patenterteilung: **04.10.2001**
(21) Anmeldenummer: 98938624.8
(22) Anmeldetag: 22.06.1998
(51) Int. Cl.: A47C 9/00

(54) **SITZ**
SEAT
SIEGE

(30) Priorität: 21.06.1997 DE 19726409; 21.06.1997 DE 19726410
(43) Veröffentlichungstag der Anmeldung: 12.04.2000
(73) Patentinhaber: Bayerische Motoren Werke Aktiengesellschaft, 80788 München (DE)
(72) Erfinder: FÄRBER, Ludwig, D-81677 München (DE); BEERBAUM, Peter, D-85391 Allershausen (DE); DIETZ, Ralf, D-80937 München (DE); HERRMANN, Wolfgang, D-80337 München (DE); LEIN, Rudolf, D-80939 München (DE); LEITNER, Josef, D-85084 Reichertshofen (DE); MOSER, Erhard, D-80939 München (DE); SCHREINER, Jürgen, D-81827 München (DE)
(86) Internationale Anmeldenummer: EP9803810
(87) Internationale Veröffentlichungsnummer: WO9858568

(56) Entgegenhaltungen:
- DE-A- 3 324 788

## Beschreibung

Die Erfindung bezieht sich auf einen Sitz nach dem Oberbegriff der Ansprüche 1 und 20 sowie auf ein Verfahren zur Ansteuerung eines Sitzes nach dem Oberbegriff der Ansprüche 21 und 22. Als Sitze werden alle Arten von Sitzelementen mit einem Sitzkissen und gegebenenfalls einer Rückenlehne bezeichnet, beispielsweise Bürostühle, Fahrradsättel, Sitze in Kraftfahrzeugen, etc.

Aus der deutschen Patentanmeldung 195 47 964.5 ist ein Sitz bekannt, bei dem das Sitzkissen um seine Längs- oder Querachse verkippbar ist. Durch diese Kippbewegungen mit begrenzten kleinen Kippwinkeln werden das Becken einer sitzenden Person und damit die lumbalen Bewegungssegmente der Wirbelsäule bewegt. Auf diese Weise können auch während des ansonsten statischen Sitzvorgangs die Bandscheiben ausreichend Nährstoffe aufnehmen, so daß Rückenbeschwerden, hervorgerufen durch längeres Sitzen, minimiert werden. Zur Erzielung einer besseren Versorgung der Bandscheiben ist insbesondere eine seitliche Kippbewegung des Beckens besonders geeignet.

Aus der DE 33 24 788 A1 ist ferner ein Bürostuhl bekannt, dessen Sitzkissen durch Stellelemente auf und ab bzw. hin und her bewegt werden kann.

Aufgabe der Erfindung ist es, Wege aufzuzeigen, um die beschriebene Kippbewegung bei Sitzen, insbesondere Fahrzeugsitzen, zu erzeugen.

Diese Aufgabe wird durch die Merkmale von Anspruch 1, 20, 21 oder 22 gelöst.

Gemäß Anspruch 1 ist im Bereich des Sitzkissens wenigstens ein Paar von Stellelementen vorgesehen. Diese beiden Stellelemente sind in einander gegenüberliegenden Bereichen des Sitzkissens anzuordnen und so anzusteuern, daß sie eine gegenläufige Hubbewegung zwischen einer unteren und einer oberen Position ausführen. Durch die gegengleiche Aufwärts- und Abwärtsbewegung wird eine Kippbewegung um eine Längs- oder Querachse des Sitzes erreicht. Dabei ist darauf zu achten, daß die Kippachse möglichst nahe an den Sitzbeinhöckern der auf dem Sitzkissen sitzenden Person liegt. Durch die Stellelemente darf nur eine reine Kippbewegung erzeugt werden; eine Auf- und Abwärtsbewegung der sitzenden Person, die eine nachhaltige Beeinträchtigung des Wohlbefindens zur Folge hätte, ist unbedingt zu vermeiden.

Selbstverständlich kann in jeder seitlichen bzw. vorderen und hinteren Hälfte des Sitzkissens auch mehr als nur ein Stellelement vorgesehen werden. Bevorzugt werden die einander paarweise zugeordneten Stellelemente wechselseitig über einen gemeinsamen Antrieb angesteuert, wobei selbstverständlich auch die individuelle Ansteuerung eines jeden einzelnen Stellelements möglich ist.

Die Ansprüche 2 bis 4 zeigen verschiedene Möglichkeiten der Anordnung der Stellelemente auf.
Gemäß Anspruch 2 wird die gesamte Sitzfläche gekippt, was vor allem bei Sitzkonstruktionen mit einer steifen Sitzschale umgesetzt werden kann.
Bei der Ausführung der Erfindung nach Anspruch 3 sind die Stellelemente zwischen der Tragstruktur und dem Polsterteil angeordnet. Die Tragstruktur kann ihrerseits befedert ausgebildet sein.
Bei einer Anordnung der Stellelemente unmittelbar im Polsterteil (Anspruch 4) sind nur geringe Änderungen an der Tragstruktur des Sitzes erforderlich. Aufgrund des geringen Abstandes der Stellelemente zu den Sitzhöckern der sitzenden Person erfolgt eine direkte Übertragung der Kippbewegung. Auch können die Stellelemente in direkter Linie unterhalb der Sitzbeinhöcker angeordnet werden. Durch die dazwischenliegende Polsterschicht wird die Bewegung der Stellelemente geringfügig abgefedert und somit die Kippbewegung zur Erhöhung des Sitzkomforts etwas "verwaschen". Allgemein ist bei der Einbringung der Stellelemente darauf zu achten, daß der Sitzkomfort durch die körpernah eingesetzten Stellelemente nur so wenig als möglich beeinträchtigt wird.

Stellelemente gemäß Anspruch 5 sind besonders einfach im Aufbau und in der Anpassung an den jeweiligen Anwendungsfall. Darüber hinaus sind sie kostengünstig herzustellen. Als Stellelemente kommen beispielsweise Elemente mit flexiblen Wandungen in Frage, z. B. Blasen oder Bälge aus einem gummielastischen Material. Aufgrund der relativ großen einwirkenden Gewichtskräfte durch die sitzende Person empfiehlt es sich, die Blasen, Bälge, etc. mit einer Gewebeeinlage zu verstärken. In besonderer Weise sind Rollbälge geeignet, da sie ober- und unterseitig ebenflächige, steife Begrenzungen zur Anbindung an die Sitzstruktur aufweisen. Gleichwirkend zu den genannten Stellelementen können auch kurzhubige Zylinder mit starrer Kammerwandung verwendet werden. Derartige Zylinder zeichnen sich durch einen entsprechend großen Durchmesser bei kleinem Verstellweg aus und beanspruchen somit einen Einbauraum, der im wesentlichen dem Platzbedarf balgartiger Stellelemente entspricht.

Die Stellelemente gemäß Anspruch 5 können mit Luft oder mit einer Flüssigkeit betrieben werden.
Luftbefüllte Stellelemente sind insbesondere für eine Anordnung im Polsterteil des Sitzkissens geeignet, da sie sich der Form der Sitzhöcker anpassen und nicht den Eindruck einer harten Einlage vermitteln. Wegen der Druck- und Temperaturabhängigkeit des Luftvolumens in den Stellelementen sind jedoch geeignete Maßnahmen zur Regelung des Verstellweges der Stellelemente erforderlich, beispielsweise mittels Wegmessung an den Stellelementen.
Bei Betrieb der Stellelemente mit einem flüssigen Medium kann aufgrund der Inkompressibilität der Flüssigkeit ein definierter und reproduzierbarer Stellweg realisiert werden, so daß die Steuerung oder Regelung der Stellweges über eine einfache Messung des Volumenflusses zum und vom Stellelement erfolgen kann. Aufgrund der Unnachgiebigkeit flüssigkeitsbefüllter Stellelemente ist jedoch eine Anordnung unmittelbar in der Polsterung nahe den Sitzhöckern einer sitzenden Person nur mit Einschränkungen möglich.

Gemäß Anspruch 6 wird das Medium für die Stellelemente in separaten Arbeitskammern bereitgestellt. Mit der Überführung des Mediums aus der ersten Arbeitskammer in das zugehörige Stellelement wird gleichzeitig das Medium aus dem anderen Stellelement in die zweite Arbeitskammer abgezogen, so daß sich dererfindungsgemäße Gegentakt selbsttätig einstellt. Die Entleerung desjenigen Stellelements, das sich in seiner erhöhten Lage befindet, wird durch das Gewicht der sitzenden Person unterstützt. Die Arbeitskammern sowie der Antrieb für die Volumenverschiebung können in vorteilhafter Weise außerhalb des unmittelbaren Sitzbereiches angeordnet sein, so daß innerhalb des Sitzes oder des Sitzkissens nur ein geringer Bauraum benötigt wird.

Gemäß Anspruch 7 kann die Kippbewegung beispielsweise durch einen doppeltwirkenden pneumatischen oder hydraulischen Zylinder realisiert werden. Bei einem flüssigen Arbeitsmedium kann durch Messung des Kolbenweges ein definierter und reproduzierbarer Arbeitshub der Stellelemente erreicht werden. Anstelle der im Zylinder gebildeten Arbeitskammern können auch balgförmige Arbeitskammern (Anspruch 8) vorgesehen sein.

Die Weiterbildung der Erfindung nach Anspruch 9 verzichtet auf eigene Arbeitskammern für das Medium. Hierdurch ergibt sich ein besonders einfacher Aufbau bei gleichzeitig sehr geringem Bauraumbedarf. Das Medium wird unmittelbar zwischen den beiden Stellelementen hin- und hergepumpt, ohne ein separates Reservoir, aus dem das Medium entnommen bzw. in das das Medium zurückgeführt wird. Somit ergibt sich ein "geschlossenes Pendelsystem" mit einer besonders geringen Füllmenge an Medium.

Als Druckmittelpumpen kommen generell alle bekannten Ausführungsformen von Pumpen in Frage. Bei Einsatz einer Drehschieberpumpe (Anspruch 10) ergibt sich in Verbindung mit einem flüssigen Medium der Vorteil, daß pro Umdrehung der Pumpe ein meßbares und weitgehend gleichbleibendes Volumen gefördert wird. Durch Erfassung der Drehzahl der Pumpe können die Stellelemente in einfacher Weise angesteuert oder geregelt werden. Auch ist das Anfahren einer gleichbleibenden Mittellage der Stellelementen ohne weiteres möglich. Durch entsprechende Regelung der Drehzahl der Pumpe kann der Verlauf der Stellbewegung über der Zeit beeinflußt werden.

Grundsätzlich kann anstelle einer Drehschieberpumpe auch eine Kolbenpumpe eingesetzt werden, die bei Einsatz eines flüssigen Mediums ebenfalls einen meßbaren Volumenstrom fördert. Aufgrund der auftretenden Pulsationen ist die Anwendung von Kolbenpumpen auf kleinere Einzelvolumina beschränkt. Gegebenenfalls sind Mehrkolbenpumpen einzusetzen.

In weiterer Ausgestaltung der Erfindung sind gemäß Anspruch 11 an zwei gegenüberliegenden Bereichen des Sitzkissens jeweils wenigstens zwei Stellelemente übereinander angeordnet, wobei jedes der Stellelemente einen festgelegten Verstellweg zwischen den beiden definierten und reproduzierbaren Zuständen "Stellelement vollständig entleert" und "Stellelement vollständig befüllt" ausführen kann. Durch entsprechende Befüllung oder Entleerung der einzelnen Stellelemente können somit stufenförmig verschiedene Stellhöhen angefahren werden. Dies ist erfindungsgemäß ohne Wegmessung, die eine Sensorik erfordern würde, mit besonders geringem Aufwand möglich, beispielsweise mit einer einfachen Steuerung über Ventile, die lediglich die beiden Zustände "drucklos" bzw. "voller Betriebsdruck" erzeugen. Die Anzahl der übereinander angeordneten Stellelemente bestimmt die Anzahl der möglichen Stellpositionen.

Als Stellelemente kommen bevorzugt Elemente mit flexiblen Wandungen in Frage, z. B. Blasen oder Bälge aus einem gummielastischen Material. Aufgrund der relativ großen einwirkenden Gewichtskräfte durch die sitzende Person empfiehlt es sich, die Blasen, Bälge, etc. mit einer Gewebeeinlage zu verstärken. Bei Verwendung blasenartiger Stellelemente ergibt sich ein sehr geringer Platzbedarf, da die Bauhöhe der Stellelemente im Ausgangszustand lediglich durch die Summe ihrer Wanddicken bestimmt wird. In besonderer Weise sind auch Rollbälge geeignet, da sie ober- und unterseitig ebenflächige, steife Begrenzungen zur Anbindung an die Sitzstruktur aufweisen. Gleichwirkend zu den genannten Stellelementen können auch kurzhubige Zylinder mit starrer Kammerwandung verwendet werden. Derartige Zylinder zeichnen sich durch einen entsprechend großen Durchmesser bei kleinem Verstellweg aus und beanspruchen somit einen Einbauraum, der im wesentlichen dem Platzbedarf balgartiger Stellelemente entspricht.

Bei zwei übereinander angeordneten Stellelementen ergeben sich drei definierte Stellhöhen: Der drucklose Zustand beider Stellelemente markiert die untere Stellung, deren Bauhöhe zum Beispiel bei blasenartigen Stellelementen allein durch die Summe der Wanddicken der beiden Blasen bestimmt wird. Eine mittlere Position ergibt sich durch Druckbeaufschlagung eines der beiden Stellelemente, während das zweite Stellelement drucklos bleibt. Schließlich kann die obere Position durch Druckbeaufschlagung beider Stellelemente definiert angefahren werden. Werden die beiden Stellelemente gleichartig ausgeführt, kann eine mittlere Position angefahren werden, die exakt in der geometrischen Mitte zwischen unterer und oberer Position liegt. Durch eine abwechselnd gegensinnige Ansteuerung der paarweise angeordneten Stellelemente in den beiden Sitzkissenbereichen wird eine Verkippung des Beckens um die Längs- oder Querachse des Sitzes erzielt, wie in Anspruch 22 beschrieben. Selbstverständlich umfaßt die beanspruchte Ansteuerung sinngemäß auch Ausführungsformen mit mehr als zwei übereinander angeordneten Stellelementen.

Bei flüssigkeitsbefüllten Stellelementen ist der Stellweg - entsprechende Gestaltung des Stellelementes vorausgesetzt - weitestgehend unabhängig von der Belastung des Stellelements und der Umgebungstemperatur. Somit lassen sich in besonders einfacher Weise reproduzierbare Stellwege erzielen.

Pneumatische Stellelemente hingegen sind in der Regel einfacher aufgebaut und einfacher anzusteuern als flüssigkeitsbefüllte Stelletemente. Aufgrund der Kompressibilität des gasförmigen Mediums und dessen starker Temperaturabhängigkeit ist der (maximale) Stellweg jedoch nicht reproduzierbar. Daher wird gemäß Anspruch 12 vorgeschlagen, durch eine zusätzliche Einrichtung am Stellelement dessen Verstellweg selbsttätig zu begrenzen. Somit wird, unabhängig von der Belastung des pneumatischen Stellelements, jeweils ein definierter maximaler Stellweg eingehalten, sofern das Stellelement mit einem Innendruck beaufschlagt wird, der größer ist, als es aufgrund der wirksamen Innenfläche des Stellelements und der jeweiligen Belastung durch eine sitzende Person notwendig wäre. Damit ist sichergestellt, daß ohne zusätzlichen Maßnahmen, wie beispielsweise eine Wegmessung, ein konstanter Verstellweg eingehalten wird.

So sind gemäß Anspruch 13 Wegbegrenzungen im Inneren des Stellelements vorgesehen. Diese Wegbegrenzungen bestehen bevorzugt aus einem flexiblen, nicht dehnbarem Material. Sie können bei Stellelementen mit Wandungen aus einem Kunststoffmaterial bei der Herstellung unmittelbar mit dem Stellelement verschweißt werden. Hierdurch ergibt sich ein besonders einfacher Aufbau und eine kostengünstige Herstellung.

Alternativ können die - in Verstellrichtung betrachtet - gegenüberliegenden Wandabschnitte bei Stellelementen aus einem Kunststoffmaterial abschnittsweise miteinander verschweißt werden, so daß sich durch diese Verschweißungen ebenfalls eine Wegbegrenzung ergibt (vergleichbar den Absteppungen beispielsweise bei Luftmatratzen). Daneben sind selbstverständlich auch außenliegende Wegbegrenzungen möglich, wobei die teilweise oder umlaufend ringförmige Umschlingung des Stellelements beispielsweise durch Bänder aus flexiblem und nicht dehnbarem Material erfolgt. Bevorzugt wird die Wegbegrenzung am Außenumfang des Stellelements zusätzlich fixiert, um ein Abrutschen im drucklosen Zustand des Stellelements zuverlässig zu verhindern.

Entscheidend ist bei Einsatz eines gasförmigen Druckmittels zum Betrieb derStellelemente, daß ein ausreichend hoher Druck zur Verfügung steht, um in Verbindung mit der erfindungsgemäßen Wegbegrenzung unabhängig von der Belastung durch die sitzende Person jeweils konstante Stellwege und damit definierte, begrenzte Kippwinkel zuverlässig einhalten zu können. Die Ansteuerung der Stellelemente kann über einfach aufgebaute Ventile erfolgen. Eine Sensorik zur Auswertung der jeweils vorliegenden Stellhöhe ist nicht erforderlich. Außerdem ist bei mehreren Sitzen, beispielsweise in einem Fahrzeug, eine zentrale Luftversorgung mit einer einzigen Druckquelle ausreichend.

In weiterer Ausgestaltung der Erfindung kann gemäß Anspruch 14 zwischen den Stellelementen beispielsweise der beiden Sitzhälften ein Absperrventil vorgesehen sein, durch das ein Austausch des Mediums zwischen den Stellelementen zuverlässig verhindert wird. Eine Aktivierung des Absperrventils erfolgt durch den Benutzer, wenn die Einrichtung zur Erzeugung einer Kippbewegung abgeschaltet ist und das Sitzkissen in einer "schiefen" Lage fixiert werden soll, indem die Stellelemente in unterschiedlicher Höhenposition "arretiert" werden. Durch das Absperrventil wird ein langsames Überströmen des Mediums, z. B. durch Leckverluste in einer Pumpe, verhindert. Eine derartige Anwendung kommt beispielsweise für Sitzbenutzer in Betracht, die aus orthopädischen Gründen eine Schiefstellung des Sitzkissens benötigen.

Die Ansprüche 15 bis 19 zeigen beispielhaft weitere grundsätzliche Wirkprinzipien von Stellelementen auf. Die genannten Wirkprinzipien können durch einen motorischen Stellantrieb, beispielsweise einen Elektromotor oder aber auch mit einem Druckmittel umgesetzt werden. Insbesondere Elektromotoren zeichnen sich durch geringen Bauraumbedarf und ihre einfache Ansteuerbarkeit aus. Die motorischen Stellantriebe können mit allen bekannten Übertragungselementen kombiniert werden, beispielsweise mit rotatorischen oder linearen Getrieben, Exzentern, Zahnstangen, etc. Bei Druckmittelantrieb werden aufgrund der besseren Regelungsmöglichkeiten und der höheren Arbeitsdrücke hydraulische Medien bevorzugt.

Die direkte Umsetzung der Stellbewegung über Hebelarme (Anspruch 15) erfordert in den meisten Fällen ein Getriebe zur Kraftübersetzung, wobei sowohl rotatorische als auch lineare Getriebe, je nach Art der Krafterzeugung, denkbar sind.

Spindeltriebe gemäß Anspruch 16 werden von einem Drehmotor angetrieben und wandeln dessen Rotationsbewegung in eine Vertikalbewegung um. Bevorzugt ist eine gemeinsame Antriebswelle für die paarweise angeordneten Stellelemente vorzusehen. Sinngemäß gilt dies auch für Exzenterantriebe gemäß Anspruch 17 und Hubgestänge gemäß Anspruch 18.

Durch keilförmige Elemente (Anspruch 19), insbesondere keilförmige Scheiben, die gegeneinander verdreht werden, können Höhenänderungen im Bereich der Sitzhöcker der sitzenden Person erreicht werden. Die Keilscheiben können hierbei zur Verringerung der Reibung über Wälzkörper gegeneinander gelagert sein.

Gemäß Anspruch 20 wird die Verkippung des Sitzkissens durch ein einseitig angreifendes Stellelement realisiert. Diese Verkippung bietet sich insbesondere bei solchen Sitzen an, deren Sitzkissen eine starre "Sitzwanne" aufweist, die als Ganzes um eine vorgegebene Mittelachse verkippbar ist. Die Verkippung über ein einseitig angreifendes Stellelement läßt sich aber auch bei Sitzen mit einem Federkern-Unterbau anwenden, wobei sich in diesem Fall selbsttätig eine Kippachse etwa in der Mitte des Sitzkissens einstellt. Das Stellelement ist bevorzugt außerhalb der Tragstruktur des Sitzkissens angeordnet. Auch eine Anordnung des Stellelements zwischen Tragstruktur und Polsterteil ist möglich. Als Stellelemente kommen beispielsweise grundsätzlich alle oben angegebenen Ausführungsformen in Frage.

Wie bereits angesprochen, ergeben sich beim Betrieb der Stellelemente mit einem flüssigen Medium Vorteile hinsichtlich der Steuerung oder Regelung des Stellweges, da über die Messung des Volumenflusses ein definierter Stellweg erreicht werden kann.
Anspruch 21 beschreibt ein Verfahren, mit dem, unabhängig von der Sitzposition oder dem Körpergewicht des Sitzbenutzers, eine jeweils gleichbleibende Mittellage für ein blasenartiges Stellelement (gemäß Anspruch 5) erreicht werden kann.
Bestimmte Bauarten von Pumpen (z. B. Drehschieberpumpen) geben mit jeder Umdrehung eine festgelegte Anzahl meßbarer Impulse ab, mit einem linearen Zusammenhang zwischen der Impulsanzahl und der geförderten Flüssigkeitsmenge. Der geförderte Flüssigkeitsstrom ist jedoch innerhalb bestimmter Grenzen abhängig von verschiedenen Parametern, z. B. Antriebsrichtung der Pumpe, Pump- oder Saugbetrieb, Höhe des Druckes, gegen den gefördert oder mit dem abgesaugt wird, etc.

Bei dem erfindungsgemäßen Verfahren wird in einem geschlossenen System, in dem die Pumpe ein vorgegebenes Flüssigkeitsvolumen zwischen zwei Stellelementen 1 und 2 hin- und herbefördert, zunächst ein Ausgangszustand definiert, bei dem eines der Stellelemente (z. B. das Stellelement 1) gerade vollständig entleert ist. Dieser Zustand ist anhand des bei entleertem Stellelement auftretenden steilen Druckabfalls in der Pumpe eindeutig zu bestimmen und wird nachfolgend als Anfangswert L12 bezeichnet, mit L = "Stellelement leer" und 12 = "Pumprichtung vom Stellelement 1 in das Stellelement 2". Nachfolgend fördert die Pumpe die Flüssigkeit in das zuvor entleerte Stellelement 2 zurück, bis eine fiktive Mittellage des Stellelements 2 (und damit auch des Stellelements 1) erreicht ist. Hierbei wird die Pumpe mit einer Impulszahl angesteuert, die auf einem Voreinstellwert basiert, so daß für den ersten Zyklus nach der Inbetriebnahme des Systems unter Umständen zunächst noch eine unrichtige ("schiefe") Mittellage erzeugt wird. Anschließend wird das Stellelement 2 vollständig befüllt, wobei als Maß für die vollständige Füllung der Druckabfall im nunmehr vollständig entleerten Stellelement 1 herangezogen wird (Endwert V12 mit V = "Stellelement voll"). Die Anzahl der von der Pumpe gelieferten Impulse N12 zwischen den beiden Werten L12 und V12 wird in einem Datenspeicher abgelegt.

In gleicher Weise wird für die umgekehrte Pumprichtung vom Stellelement 2 in das Stellelement 1 der Endwert V21 ermittelt. Ausgangspunkt für diese Zählung ist der Anfangswert L21 (entspricht dem Wert V12). Somit erhält man für die zweitePumprichtung eine Impulsanzahl N21.

Nach dem ersten vollständigen Zyklus stehen nunmehr mit N12 und N21 Maßzahlen zur Verfügung, die angeben, wie viele Impulse jeweils für das vollständige Umpumpen der Flüssigkeit zwischen den beiden Stellelementen erforderlich sind. Die Maßzahlen N12 und N21 werden mit zuvor empirisch ermittelten Faktoren F12 und F21 multipliziert. Die Faktoren F12 und F21 sind für eine bestimmte ausgeführte Einheit aus Sitz und Stellelementen gleichbleibend. Da die Faktoren F12 und F21 in der Regel nur geringfügig voneinander abweichen, kann für die beiden Pumprichtungen vereinfachend auch mit einem einheitlichen Faktor F gearbeitet werden.

Durch das Produkt F12·N12 bzw. F21·N21 wird im nachfolgenden Zyklus die exakte geometrische Mittellage der beiden Stellelemente angefahren. Bemerkenswert ist hierbei, daß dieses Anfahren der Mittellage ohne direkte Wegmessung erfolgen kann, so daß sich das erfindungsgemäße Verfahren durch einen sehr geringen Aufwand auszeichnet. Durch die Maßzahlen N12 und N21 wird die jeweilige Belastung des Sitzes durch den Insassen berücksichtigt, so daß bereits nach einem einzigen Initialisierungszyklus, in dem die Werte N12 und N21 ermittelt werden, die geometrische Mittellage der Stellelemente exakt eingehalten wird.

Die Sitzbelastung wird maßgeblich vom Körpergewicht des Sitzbenutzers und der Kontaktfläche zwischen dem Sitzbenutzer und dem Sitzkissen bestimmt. Daneben beeinflußt auch die Sitzposition des Sitzbenutzers die Werte N12 und N21, je nach dem, ob die rechte oder linke bzw. die vordere oder hintere Sitzhälfte stärker belastet werden. Damit stellt sich gemäß dem erfindungsgemäßen Verfahren das System nicht nur auf unterschiedliche Sitzbenutzer, sondern auch dynamisch auf wechselnde Sitzpositionen ein- und desselben Sitzbenutzers ein.

Mögliche Ausführungsbeispiele der Erfindung sind in der Zeichnung schematisch dargestellt und nachfolgend näher beschrieben. Es zeigt:
- Fig. 1: ein Sitzkissen mit außerhalb der Tragstruktur angeordneten Stellelementen,
- Fig. 2: ein Sitzkissen mit Stellelementen zwischen der Tragstruktur und dem Polsterteil,
- Fig. 3: ein Sitzkissen mit in das Polsterteil eingesetzten Stellelementen,
- Fig. 4 bis 7: Ausführungsbeispiele fluidbetriebener Stellelemente,
- Fig. 8 bis 10: Ausführungsbeispiele "mechanisch" angetriebener Stellelemente,
- Fig. 11, 12: eine Anordnung eines einzelnen Stellelementes an einem Sitzkissen,
- Fig. 13, 14: Diagramme zur Veranschaulichung der Ermittlung der Werte N12 und N21 zum korrekten Anfahren der Mittellage flüssigkeitsbefüllter Stellelemente,
- Fig. 15: eine schematische Darstellung eines weiteren erfindungsgemäßen Stellelements,
- Fig. 16: eine Anordnung erfindungsgemäßer Stellelemente gemäß Fig. 15 in einem Kraftfahrzeugsitz,
- Fig. 17: ein tabellarisches Ansteuerungsschema für eine Anordnung von Stellelementen gemäß Fig. 16 und
- Fig. 18: eine der Fig. 16 entsprechende Anordnung mit zwei Druckquellen.

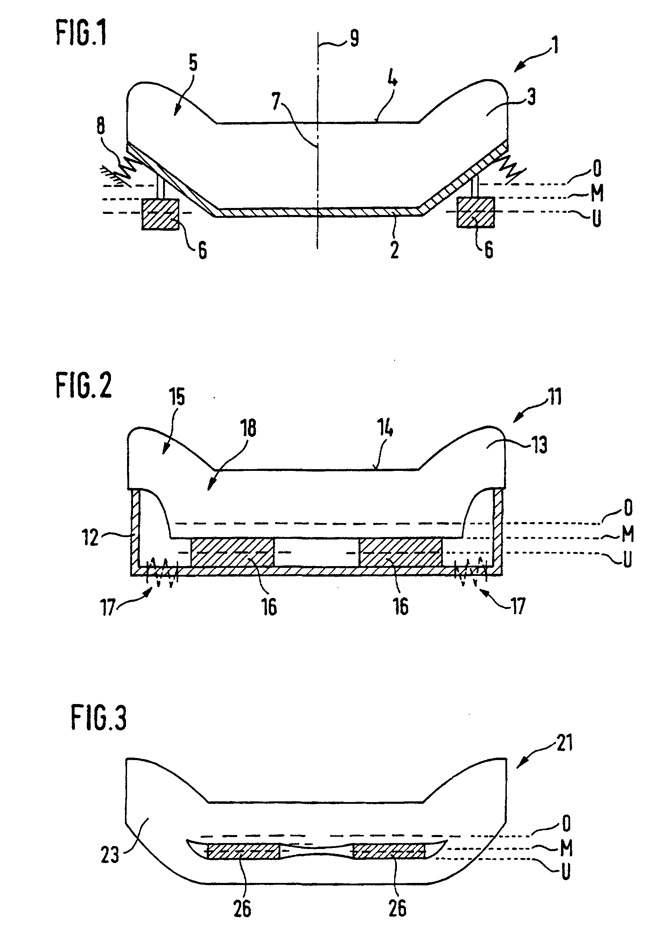

Fig. 1 zeigt ein Sitzkissen 1, das sich aus einer Tragstruktur 2 und einem Polsterteil 3 zusammensetzt. Der mittlere Teil des Sitzkissens 1 ist als Sitzfläche 4 ausgebildet, während die seitlichen Bereiche 5 wuistförmig gestaltet sind. An der Unterseite der Tragstruktur 2 greifen rechts und links jeweils außenliegend Stellelemente 6 an, die eine Mittellage M sowie eine obere und eine untere Position O bzw. U einnehmen können. Da die Tragstruktur 2 gegenüber einem nicht dargestellten Sitzrahmen oder einer Sitzaufhängung innerhalb bestimmter Grenzen federnd gelagert ist (Aufhängung 8), wird bei einer gegensinnigen Bewegung der rechten und linken Stellelemente 6 eine Kippbewegung des Sitzkissens um eine Kippachse 7 erzeugt, die in der Längsmittenebene 9 des Sitzkissens 1 liegt.

Fig. 2 zeigt ein Sitzkissen 11, bei dem die Stellelemente 16 zwischen der Tragstruktur 12 und dem Polsterteil 13 angeordnet sind. Hierfür eignen sich vor allem flachbauende Stellelemente 16. Die einzelnen Positionen, die die Stellelemente 16 einnehmen können, sind wiederum mit M, O und U bezeichnet. Übergangsbereiche 18 zwischen den relativ starr an die Tragstruktur 12 angebundenen Wülsten 15 und der Sitzfläche 14 ermöglichen einen Ausgleich der durch die Stellelemente 16 hervorgerufenen Kippbewegungen. Die Tragstruktur 12 kann ihrerseits befedert sein, wie in Fig. 2 anhand der gestrichelt dargestellten Federn 17 veranschaulicht.

Fig. 3 zeigt eine weitere Möglichkeit der Einbringung von Stellelementen 26 in ein Sitzkissen 21, das sich wiederum aus einer Tragstruktur (nicht dargestellt) und einem Polsterteil 23 zusammensetzt. Die Stellelemente 26 sind bevorzugt als luftgefüllte Blasen oder flachbauende Rollbälge ausgeführt. Sie können in das Polsterteil eingelegt oder eingeklebt oder auch vom Material des Polsterteils 23umschäumt sein.

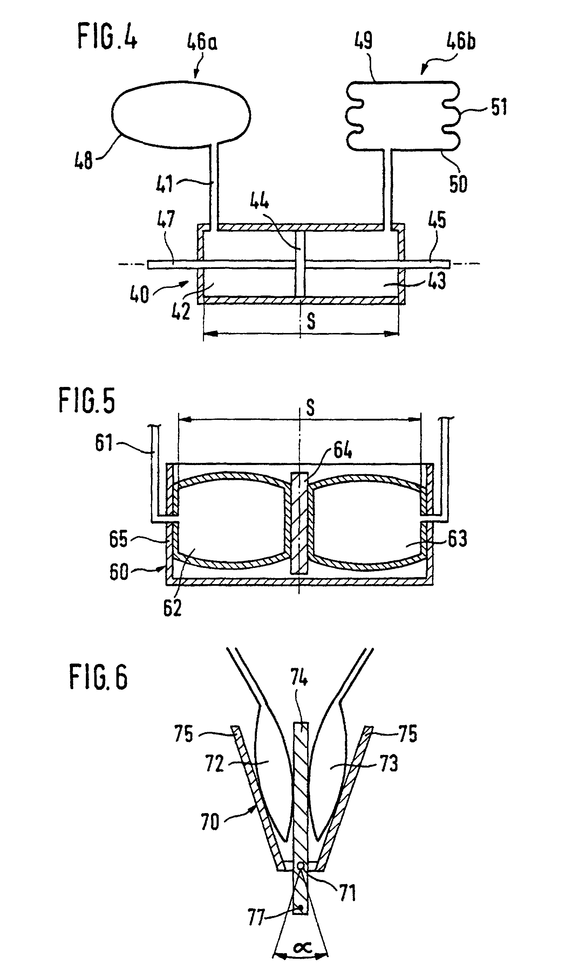

Die Fig. 4 bis 7 zeigen verschieden Möglichkeiten des Antriebs von Stellelementen über ein flüssiges oder gasförmiges Medium.

In Fig. 4 ist ein doppeltwirkender Zylinder 40 dargestellt, der über Verbindungsleitungen 41 Stellelemente 46a und 46b ansteuert. Der Zylinder weist eine erste und eine zweite Arbeitskammer 42 bzw. 43 auf, die durch einen Kolben 44 voneinander getrennt sind. Über eine Kolbenstange 45 kann der Kolben verschoben werden, wobei sich die Volumina der beiden Arbeitskammern 42 bzw. 43 in gegensinniger Weise vergrößern bzw. verkleinern. Eine zweite Kolbenstange 47 stellt die Volumengleichheit in den beiden Arbeitskammern 42 und 43 sicher. Mit der linearen Bewegung des Kolbens 44 (Weg s) wird der Füllgrad des linken bzw. rechten Stellelements 46a, 46b ebenfalls kontinuierlich verändert.

Als Stellelemente 46a und 46b sind beispielhaft links und rechts unterschiedliche Ausführungsformen dargestellt, wobei bei einer ausgeführten Anlage selbstverständlich beidseitig identische Stellelemente vorzusehen sind. Das Stellelement 46a ist als blasenförmiges Gebilde mit allseitig flexiblen Wandungen 48 ausgebildet, während das Stellelement 46b von einem rollbalgartigen Gebilde mit einer oberen und einer unteren Deckplatte 49 bzw. 50 sowie einem gummielastischen Rollbalg 51 gebildet wird.

Im Ausführungsbeispiel der Fig. 5 sind die Arbeitskammern 62 und 63 in einem Gehäuse 60 aufgenommen und werden von Blasen oder Rollbälgen gebildet, die über Verbindungsleitungen 61 an nicht dargestellte Stellelemente angeschlossen sind. Das Gehäuse 60 führt einen Schieber 64, der parallel zu den seitlichen Begrenzungswänden 65 des Gehäuses 60 verschoben werden kann (Weg s).

Bei der alternativen Ausführungsform gemäß Fig. 6 sind die beiden Arbeitskammern 72 und 73 in einem im Querschnitt etwa V-förmigen Gehäuse 70 angeordnet. Eine Schwenkplatte 74 ist an der Schnittlinie der beiden Begrenzungswände 75 des Gehäuses 70 schwenkbar gelagert (Schwenkachse 71), so daß die Platte 74 bei einer Krafteinleitung z. B. am Angriffspunkt 77 oder einer Drehmomenteinleitung an der Schwenkachse 71 verstellt werden kann (Schwenkwinkel α).

Die Stellelemente gemäß der Fig. 4 bis 6 werden über voneinander getrennte Fluidkreise jeweils gegengleich verstellt. Die Verstellung kann beispielsweise über einen hin- und hergehenden Linearantrieb, einen Exzenterantrieb, etc. erfolgen. Bei Einsatz flüssiger Medien werden belastungsunabhängig nahezu gleichbleibende Stellwege an den Stellelementen erreicht. In allen Fällen ist ein Reservoir (Arbeitskammern 42, 43 bzw. 62, 63 bzw. 72, 73) vorgesehen, über das die zugehörigen Stellelemente befüllt bzw. entleert werden.

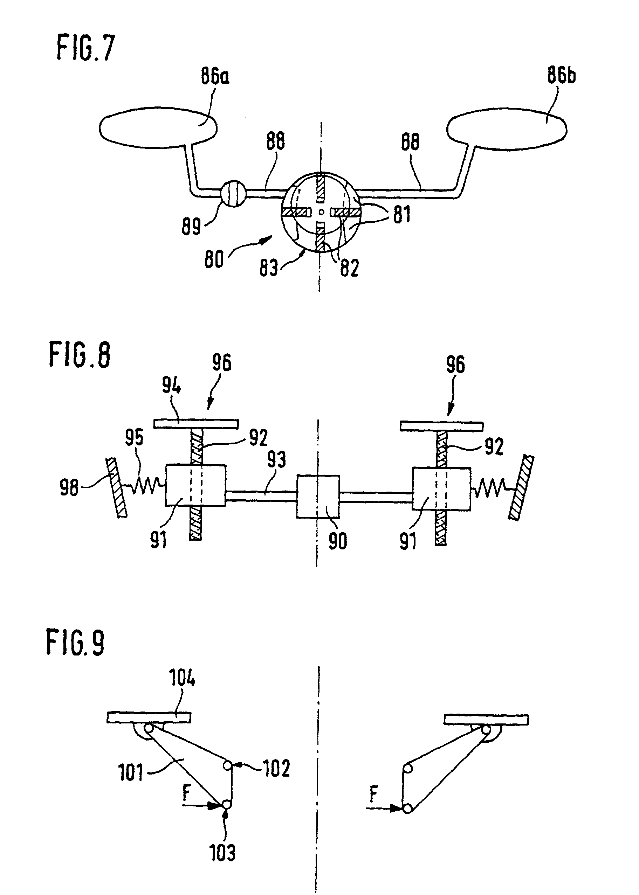

Im Unterschied hierzu sind die Stellelemente 86a und 86b gemäß Fig. 7 über eine Drehschieberpumpe 80 unmittelbar miteinander verbunden und werden gegensinnig mit Druck beaufschlagt. Die Drehschieberpumpe 80 weist mehrere Kammern 81 auf, die ein definiertes Kammervolumen fördern. Die einzelnen Kammern 81 sind über radial bewegliche Schieber 82 voneinander getrennt und gegenüber dem Pumpengehäuse 83 abgedichtet. Durch die in Fig. 7 gezeigte Anordnung kann auf separate Kammern zur Bereitstellung des Arbeitsmediums verzichtet werden, wodurch sich eine besonders kompakte Bauweise ergibt. Die Drehschieberpumpe 80 kann beispielsweise von einem Elektromotor angetrieben werden, dessen Drehzahl über einen Hallsensor erfaßt wird, so daß bei Förderung flüssiger Medien der Stellweg an den Stellelementen 86a und 86b in einfacher Weise gesteuert oder geregelt werden kann.

In einer der Verbindungsleitungen 88 ist ein in beiden Strömungsrichtungen wirkendes Absperrventil 89 vorgesehen, mit dem ein Austausch des Mediums zwischen den beiden Stellelementen 86a und 86b unterbunden werden kann, um eine statische "Schiefstellung" des Sitzkissens des Fahrzeugsitzes zu erzielen. Die Schiefstellung wird beispielsweise dadurch erreicht, daß das im stromlosen Zustand sperrende Ventil 89 kurzzeitig bestromt wird, so daß über die Leckspalte der Drehschieberpumpe 80 unter der Gewichtskraft und ggf. einer bewußt beeinflußten Gewichtsverteilung des Sitzbenutzers ein Leckstrom fließt und sich die gewünschte Schieflage einstellt.

Fig. 8 zeigt Stellelemente 96, die jeweils eine Spindelmutter 91 und eine Spindel 92 aufweisen. Beide Stellelemente 96 werden über eine Antriebswelle 93 von einem Elektromotor 90 angetrieben. Die Spindelmuttern 91 setzen die Rotationsbewegung der Welle 93 in eine Vertikalbewegung der plattenförmigen Übertragungselemente 94 um. Die Spindelmuttem 91 sind über Federn 95 gegenüber dem Sitzaufbau 98 abgestützt. Die Paarungen "Spindelmutter 91 - Spindel 92" weisen je Sitzkissenhälfte ein rechts- bzw. linksgängiges Gewinde auf, um bei Rotation der Welle 93 eine gegensinnige Bewegung der beiden Übertragungsplatten 94 zu erreichen.

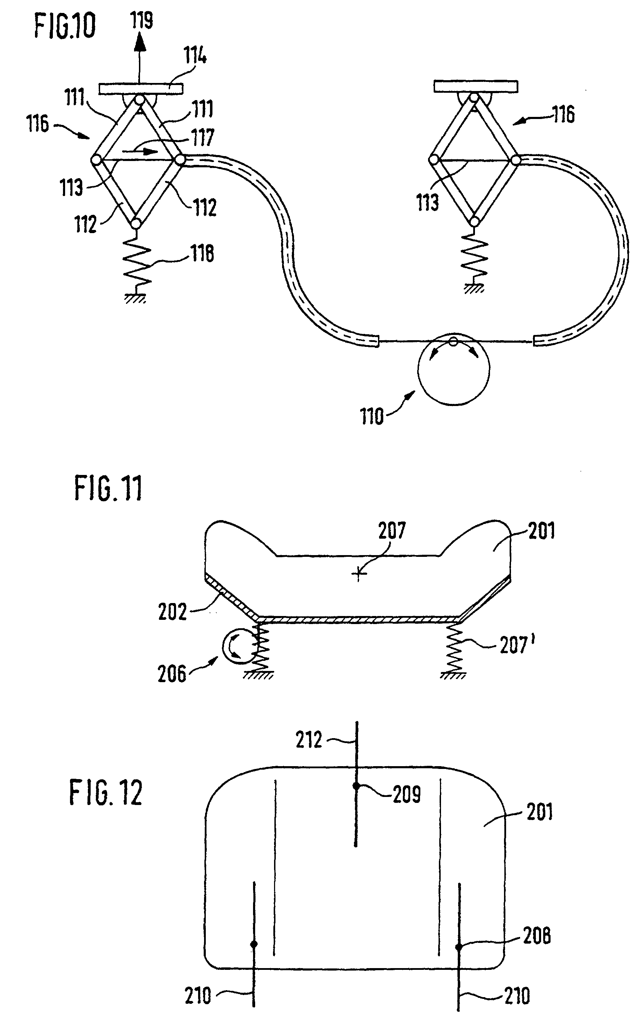

Fig. 9 zeigt Hebelanordnungen 101, mit denen eine direkte Krafteinleitung auf Übertragungsplatten 104 erfolgt. Die Übertragungsplatten 104 sind beispielsweise direkt unterhalb der Sitzhöcker einer sitzenden Person angeordnet, wobei eine ausreichend dicke Schicht des Polstermaterials des Sitzkissens einen hohen Sitzkomfort sicherstellt. Die Hebel 101 sind über Lagerstellen 102 am Sitzaufbau gelagert. Die Krafteinleitung erfolgt an den Stellen 103, wie beispielsweise anhand der Pfeile F dargestellt, wodurch sich die Höhenlage der gelenkig am Endabschnitt 105 des Hebels 101 angeordneten Übertragungsplatten 104 gegensinnig ändert.

Die Stellelemente 116 gemäß Fig. 10 sind als Scherenhubgestänge ausgebildet. Sie bestehen aus einer unteren und einer oberen Schere 111 bzw. 112, die über einen Seilzug 113 bewegt werden. Bei einer Verkürzung des Seilzuges 113 am linken Stellelement 116 gemäß dem Pfeil 117 werden die Scheren 111 und 112 in Richtung ihrer zusammengeklappten Lage überführt, wodurch die Übertragungsplatte 114 nach oben verlagert wird (Pfeil 119). Die Verstellung des Seilzuges 113 erfolgt über einen hin- und hergehenden Antrieb 110, der an den beiden Stellelementen 116 jeweils eine gegenläufige Bewegung erzeugt. Parallel zur Anhebung der rechten Stellelement 116 wird die linke Stellelement 116 durch die Gewichtskraft der sitzenden Person und/oder eine Feder 118 gegengleich in eine abgesenkte Lage überführt.

Die Figuren 11 und 12 zeigen ein Sitzkissen 201, an dessen einer Seite ein einzelnes Stelleiement 206 angreift. In der dargestellten Ausführungsform besteht das Stellelement 206 aus einem Exzenterantrieb im linken rückwärtigen Bereich des Sitzkissens 201. Das Sitzkissen 201 weist eine starre Tragstruktur 202 auf, die über Federn 207' mit ihren hinteren Anbindungspunkten 208 an zwei hinteren Sitzschienenabschnitten 210 und über einen vorderen Anbindungpunkt 211 an einem mittleren vorderen Sitzschienenabschnitt 212 gelagert ist. Durch diese "Dreipunktlagerung" ergibt sich bei der dargestellten einseitig eingebrachten Stellbewegung über den Exzenterantrieb 206 eine Verkippung des Sitzkissens 201 um die Kippachse 207.

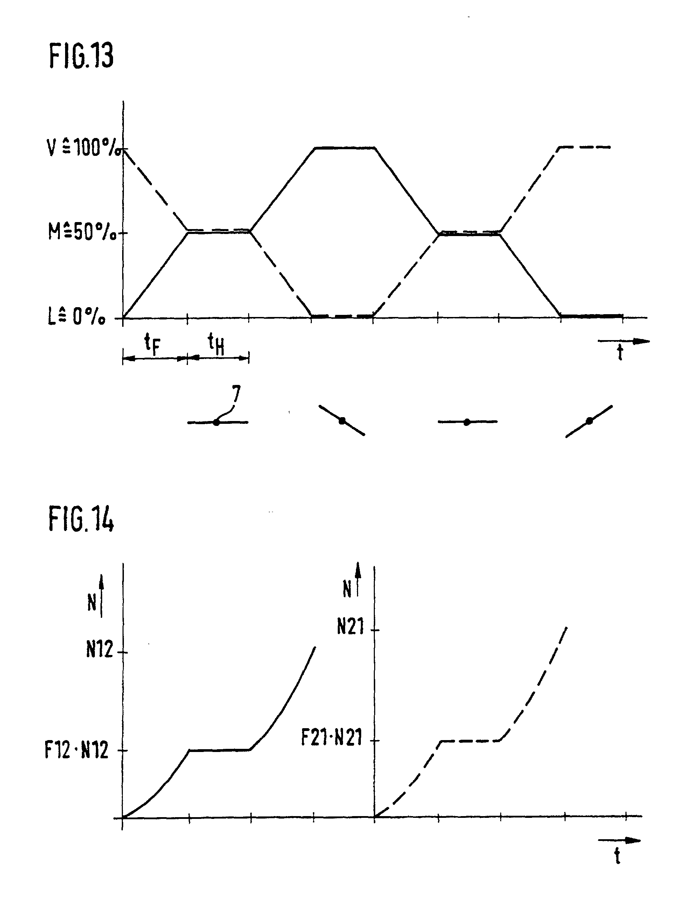

Die Fig. 13 und 14 veranschaulichen ein erfindungsgemäßes Verfahren zum Anfahren einer geometrischen Mittellage bei flüssigkeitsbetriebenen Stellelementen, wie beispielsweise den Stellelementen 86a und 86b aus Fig. 7.

In Fig. 13 ist mit einer durchgezogenen Linie der Stellweg s des ersten Stellelements 86a über der Zeit t aufgetragen. Hierzu gegenphasig verläuft der mit gestrichelter Linie angegebene Stellweg s des zweiten Stellelements 86b. Durch die dargestellten Wegverläufe wird die in der Patentanmeldung 195 47 964.5 beschriebene Kippbewegung des Sitzkissens erzeugt, die eine Bewegung der lumbalen Abschnitte der Wirbelsäule einer sitzenden Person erwirkt. Die einzelnen Phasen der Kippbewegung des Sitzkissens um die Kippachse 7 sind in Fig. 13 symbolisch veranschaulicht.

Ausgehend von einem unbefüllten Zustand L wird das Stellelement 86a zunächst so weit mit Flüssigkeit befüllt (Fülldauer t_{F}), daß sich eine Mittellage M (halber maximaler Stellweg) einstellt. Nach einer Haltedauer t_{H} wird das Stellelement 86a vollständig mit der Flüssigkeit befüllt (Zustand V). Anschließend wird der Füllgrad so weit reduziert, daß sich wiederum die Mittellage M einstellt, um nachfolgend im letzten Abschnitt des Zyklus den Ausgangszustand L wieder anzufahren. Die Füll- Haltedauer t_{F} bzw. t_{H} sind im gewählten Beispiel während der einzelnen Phasen des Zyklus gleich groß und über der Zyklusdauer gleichbleibend. Beispielsweise betragen t_{F} bzw. t_{H} 10 Sekunden, so daß sich eine Zyklusdauer von insgesamt 80 Sekunden ergibt.

in Fig. 14 ist die Anzahl N der an der Pumpe, beispielsweise einer Drehschieberpumpe 80, auftretenden Impulse über der Zeit t aufgetragen. In der ersten Hälfte des Zyklus fördert die Pumpe 80 die Flüssigkeit vom Stellelement 86a in das Stellelement 86b (durchgezogene Linie im linken Teil des Diagramms), während in der zweiten Zyklushälfte die Pumprichtung umgekehrt verläuft (gestrichelte Linie im rechten Teil des Diagramms).

Ausgehend von einer im vorangegangenen Zyklus ermittelten Impulszahl N12, die der vollständigen Füllung des Stellelements 86a entspricht, wird das Stellelement 86a zu Beginn des neuen Zyklus bis zum Wert F12·N12 befüllt. Damit ist die geometrische Mittellage M des Stellelements 86a erreicht. Anschließend wird das Stellelement 86a vollends befüllt, wobei als Maß für die vollständige Befüllung ein signifikanter Druckabfall in der Pumpe 80 herangezogen wird. Dieser Druckabfall stellt sich mit der synchron erfolgenden, vollständigen Entleerung des Stellelements 86b ein.

In der zweiten Hälfte des Zyklus wird die Flüssigkeit aus dem Stellelement 86a wieder abgezogen, mit entsprechender Verweildauer in der Mittellage M. Dieses Entleeren des Stellelements 86a wird über die Befüllung des Stellelements 86b (gestrichelte Linie) gesteuert, wobei ein aus dem vorherigen Zyklus übernommener Wert N21 in Verbindung mit dem spezifischen Faktor F21 in gleicher Weise die Einhaltung der Mittellage M gewährleistet.

Die Faktoren F12 und F21 (im vorliegenden Beispiel etwa 0,4) werden herstellerseitig ermittelt und verändern sich über der Lebensdauer des Sitzsystems nicht nennenswert.

In einem Folgezyklus, der sich an den in Fig. 13 und 14 dargestellten Ablauf anschließt, werden die neu ermittelten Werte N12 und N21, die für die vollständige Befüllung der beiden Stellelemente 86a, 86b erforderlich waren, verwendet, das heißt, in jedem nachfolgenden Zyklus werden die Werte N12 und N21 durch aktuelle Werte aus dem vorangegangenen Zyklus ersetzt.

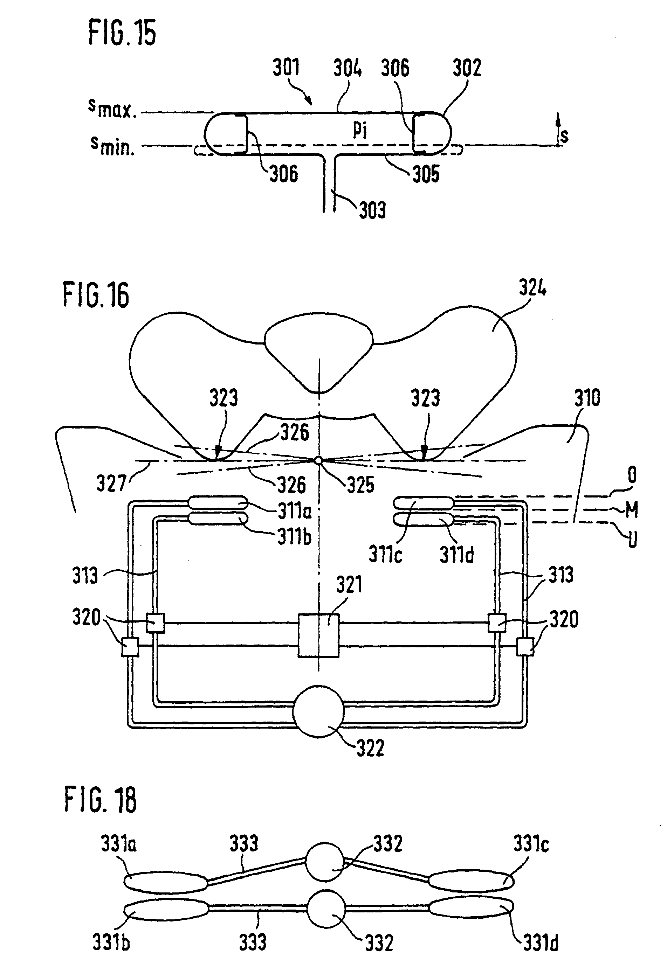

Die Figuren 15 bis 18 zeigen eine weitere Ausgestaltung der Erfindung. In Figur 15 ist ein Stelleiement 301 mit flexiblen Wandungen 302 (Figur 15) und einer Luftzuführung 303 dargestellt. Im drucklosen Zustand des Stellelements 301 (gestrichelte Linien) liegen die obere und die untere Wandung 304 bzw. 305 des Stellelements unmittelbar aufeinander. Im druckbeaufschlagten Zustand (durchgezogene Linien) sind die beiden Wandungen 304 und 305 zueinander beabstandet und bilden einen blasenförmigen Körper. Im Inneren des Stellelements 301 sind zwei Stege 306 vorgesehen, die mit den Wandungen 304 und 305 des Stellelements 301 verschweißt sind. Die Stege 306 bestehen aus einem flexiblen, jedoch nicht dehnbaren Kunststoffmaterial und bilden eine Wegbegrenzung in Richtung des Stellweges s. Über die Luftzuführung 303 wird ein konstanter Innendruck pᵢ bereitgestellt, dessen Kraftwirkung eine maximale äußere Gewichtsbelastung überwiegt. Durch die Stege 306 wird erfindungsgemäß auch bei einer geringeren Belastung G der Stellweg s auf den Wert sₘₐₓ begrenzt. Der drucklose Zustand des Stellelements 301 repräsentiert den Ausgangsweg sₘᵢₙ, dessen Betrag durch die Wanddicken der Wandungen 304 und 305 bestimmt wird.

Gemäß Fig. 16 sind in einem Sitzkissen 310 eines Kraftfahrzeugsitzes je Sitzhälfte jeweils zwei übereinander angeordnete Stellelemente 311a, b bzw. 311c, d angeordnet. Die einzelnen Stellelemente 311a bis 311d sind dem Stellelement 301 vergleichbar aufgebaut und über Luftzuführungen 313 und Ventile 320 mit einer Druckquelle 322 verbunden. Die Ventile 320 werden über eine Steuereinrichtung 321 angesteuert. Die Stellelemente 311a bis 311d sind im Sitzkissen 310 jeweils unterhalb der Sitzhöcker 323 des Beckens 324 einer auf dem Sitzkissen 310 sitzenden Person angeordnet.

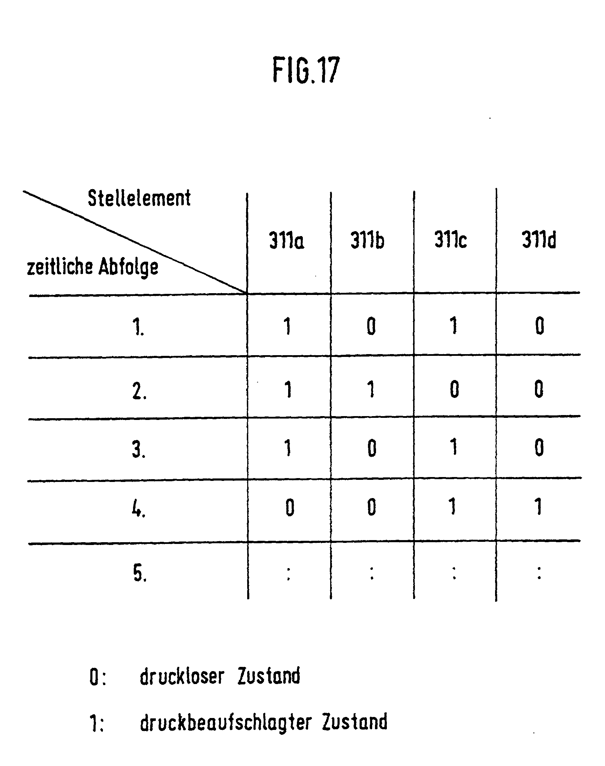

Über die Ventile 320 werden die Stellelemente 311a bis 311d entweder drucklos geschaltet oder mit dem Betriebsdruck pᵢ beaufschlagt. Dementsprechend nehmen die Stellelemente 311a bis 311d zwei exakt definierte Stellhöhen sₘᵢₙ bzw. sₘₐₓ (analog Fig. 15) ein. Durch die Anordnung zweier Stallelemente 311a, b bzw. 311c, d übereinander können über die Ventile 320 und die Steuereinrichtung 321 je Sitzkissenseite drei Positionen O, M und U angefahren werden. Bei einer Ablaufsteuerung gemäß Fig. 17 wird eine Kippung des Beckens 324 um eine Kippachse 325 erreicht. Die beiden strichpunktierten Linien 326 veranschaulichen die beiden entgegengesetzten maximalen Kipplagen des Beckens 324, während die gestrichelte Linie 327 die Mittellage des Beckens 324 darstellt, bei der je Sitzkissenseite jeweils nur ein Stellelement 311a oder 311b bzw. 311c oder 311d mit Druck beaufschlagt ist.

In Fig.18 ist eine Stelleinrichtung mit zwei separaten Druckquellen 332 dargestellt, die über Luftzuführungen 333 Stellelemente 331a bis 331d versorgt. Jede der Druckquellen 332 verbindet jeweils ein Stellelement der einen Sitzhälfte mit einem Stellelement der anderen Sitzhälfte. Die beiden Druckquellen 332 arbeiten dabei gegenphasig, so daß die Stellelemente 331a, b und 331c, d jeweils einer Sitzhälfte gegensinnig mit Druck beaufschlagt werden und sich insgesamt eine Kippbewegung ergibt wie in Fig. 16 dargestellt.

## Patentansprüche

1. Sitz, mit einem Sitzkissen (1, 11, 21, 310) und einer wenigstens ein Stellelement (6, 16, 26, 311a bis 311d, 331a bis 331d) umfassenden Einrichtung zur Erzeugung einer Kippbewegung des Beckens einer sitzenden Person um eine Längsmittelachse (7, 207) und/oder eine Querachse des Sitzkissens (1, 11, 21, 310), mit jeweils wenigstens einem Stellelement (6, 16, 26, 311a bis 311d, 331a bis 331d) im rechten bzw. im linken oder im vorderen bzw. im hinteren Bereich des Sitzkissens (1, 11, 21, 310),
**dadurch gekennzeichnet, daß** die Stellelemente (6, 16, 26, 311a bis 311d, 331a bis 331d) einander paarweise zugeordnet und so ausgebildet sind, **daß** sie eine gegenläufige Stellbewegung zwischen einer unteren und einer oberen Position (U bzw. O) ohne Auf- und Abwärtsbewegung der sitzenden Person ausführen können.

2. Sitz nach Anspruch 1, wobei das Sitzkissen eine Tragstruktur und ein Polsterteil umfaßt,
**dadurch gekennzeichnet, daß** die Stellelemente (6) außerhalb der Tragstruktur (2) des Sitzkissens (1) angeordnet sind.

3. Sitz nach Anspruch 1, wobei das Sitzkissen eine Tragstruktur und ein Polsterteil umfaßt,
**dadurch gekennzeichnet, daß** die Stellelemente (16) zwischen Tragstruktur (12) und Polsterteil (13) angeordnet sind.

4. Sitz nach Anspruch 1, wobei das Sitzkissen eine Tragstruktur und ein Polsterteil umfaßt,
**dadurch gekennzeichnet, daß** die Stellelemente (26) im Polsterteil (23) angeordnet sind.

5. Sitz nach einem der vorangegangenen Ansprüche,
**dadurch gekennzeichnet, daß** die Stellelemente als Blasen, Rollbälge oder dergleichen ausgeführt sind und mit einem flüssigen oder gasförmigen Medium betrieben werden.

6. Sitz nach Anspruch 5,
**dadurch gekennzeichnet, daß** das Medium für die Stellelemente in zwei volumenveränderlichen Arbeitskammern bereitgestellt wird, deren Volumen über einen Antrieb gegensinnig veränderbar ist.

7. Sitz nach Anspruch 6,
**dadurch gekennzeichnet, daß** die Arbeitskammern (42, 43) von einem doppeltwirkenden Zylinder (40) mit einem verschieblichen Kolben (44) gebildet werden.

8. Sitz nach Anspruch 6,
**dadurch gekennzeichnet, daß** die Arbeitskammern (62, 63; 72, 73) flexible Wandungen aufweisen, auf die ein verschiebliches oder verschwenkbares Element (64 bzw. 74) wirkt.

9. Sitz nach Anspruch 5,
**dadurch gekennzeichnet, daß** das Medium von einer Druckmittelpumpe (80) unmittelbar zwischen den Stellelementen (86a, 86b) hin- und herbewegt wird.

10. Sitz nach Anspruch 9,
**dadurch gekennzeichnet, daß** als Druckmittelpumpe eine Drehschieberpumpe (80) vorgesehen ist.

11. Sitz nach einem der vorangegangenen Ansprüche,
**dadurch gekennzeichnet, daß** im rechten bzw. im linken oder im vorderen bzw. im hinteren Bereich des Sitzkissens (310) jeweils wenigstens zwei - in Verstellrichtung betrachtet - übereinander angeordnete Stellelemente (311a, b bzw. 311c, d; 331a, b bzw. 331c, d) vorgesehen sind.

12. Sitz nach Anspruch 11,
**dadurch gekennzeichnet, daß** die Stellelemente (301; 311a, b bzw. 311c, d; 331a, b bzw. 331c, d) mit einem gasförmigen Medium betrieben werden und eine Einrichtung (306) zur Begrenzung des Stellwegs (s) aufweisen, die unabhängig vom Druck (pᵢ) im Inneren des Stellelements (301; 311a, b bzw. 311c, d; 331a, b bzw. 331c, d) wirkt.

13. Sitz nach Anspruch 12,
**dadurch gekennzeichnet, daß** die Einrichtung (306) von wenigstens einer Trennwand, einem Band, einem Steg oder dergleichen gebildet wird und im Inneren des Stellelements (301) - in Verstellrichtung betrachtet - gegenüberliegende Wandbereiche (304, 305) des Stellelements (301) miteinander verbindet.

14. Sitz nach einem der vorgenannten Ansprüche,
**dadurch gekennzeichnet, daß** zwischen den Stellelementen (86a, 86b) des rechten bzw. linken oder des vorderen bzw. hinteren Bereichs des Sitzkissens ein Absperrventil (89) vorgesehen ist, durch das ein Austausch des Mediums zwischen den Stellelementen (86a, 86b) verhindert wird.

15. Sitz nach einem der vorangegangenen Ansprüche,
**dadurch gekennzeichnet, daß** die Stellelemente Hebel (101) aufweisen, über die die Stellkraft (F) aufgebracht wird.

16. Sitz nach einem der vorangegangenen Ansprüche,
**dadurch gekennzeichnet, daß** die Stellelemente einen Spindeltrieb (91, 92) aufweisen.

17. Sitz nach einem der vorangegangenen Ansprüche,
**dadurch gekennzeichnet, daß** die Stellelemente einen Exzenterantrieb aufweisen.

18. Sitz nach einem der vorangegangenen Ansprüche,
**dadurch gekennzeichnet, daß** die Stellelemente ein scherenförmiges Hubgestänge aufweisen.

19. Sitz nach einem der vorangegangenen Ansprüche,
**dadurch gekennzeichnet, daß** die Stellelemente relativ zueinander bewegliche keilförmige Elemente aufweisen.

20. Sitz, mit einem Sitzkissen (201) und einer wenigstens ein Stellelement (206) umfassenden Einrichtung zur Erzeugung einer Kippbewegung des Beckens einer sitzenden Person um die Längsmittelachse (207) und/oder eine Querachse des Sitzkissens,
**dadurch gekennzeichnet, daß** die Einrichtung von einem einseitig an dem Sitzkissen (201) oder an der Aufhängung des Sitzkissens (201) angreifenden Stellelement (206) gebildet wird und das Sitzkissen (201) an drei Punkten (210, 210; 211) gelagert ist, wobei das Stellelement (206) im Bereich eines von zwei gegenüberliegenden Lagerungspunkten (210) angreift und das Sitzkissen (201) bei Wegbeaufschlagung durch das Stellelement (206) um eine Längsmittelachse (207) oder eine Querachse kippbar ist, die in einer vertikalen Ebene mit dem dritten Lagerpunkt (211) liegt.

21. Verfahren zur Ansteuerung eines Sitzes, der ein Sitzkissen und eine wenigstens ein Stellelement umfassende Einrichtung aufweist, die eine Kippbewegung des Beckens einer sitzenden Person um eine Längsmittelachse und/oder eine Querachse des Sitzkissens erzeugt,
**dadurch gekennzeichnet, daß** im rechten bzw. im linken oder im vorderen bzw. im hinteren Bereich des Sitzkissens jeweils ein Stellelement (86a, 86b) vorgesehen ist, wobei
- die Stellelemente (86a, 86b) einander paarweise zugeordnet sind,
- eine Pumpe (80) ein flüssiges Medium zwischen den beiden Stellelementen (86a, 86b) umpumpt,
- die Stellelemente (86a, 86b) hierdurch eine gegenläufige Stellbewegung zwischen einer unteren, einer mittleren und einer oberen Position (L bzw. M bzw. V) ausführen und
- die Pumpe (80) zum Anfahren der mittleren Position (M) mit einer Steuergröße angesteuert wird, die durch Multiplikation eines laufend erfaßten veränderlichen Pumpenkennwertes (N12, N21), der der vollständigen Befüllung der Stellelemente (86a, 86b) entspricht, mit einem unveränderlichen Faktor (F12, F21) ermittelt wird.

22. Verfahren zur Ansteuerung eines Sitzes, der ein Sitzkissen und eine wenigstens ein Stellelement umfassende Einrichtung aufweist, die eine Kippbewegung des Beckens einer sitzenden Person um eine Längsmittelachse und/oder eine Querachse des Sitzkissens erzeugt,
**dadurch gekennzeichnet, daß** im rechten bzw. im linken oder im vorderen bzw. im hinteren Bereich des Sitzkissens jeweils zwei - in Verstellrichtung betrachtet - übereinander angeordnete Stellelemente (311a, b bzw. 311c, d; 331a, b bzw. 331c, d) vorgesehen sind, wobei
- die Stellelemente (311a, b bzw. 311c, d; 331a, b bzw. 331c, d) einander paarweise zugeordnet sind,
- eine Pumpe (322; 332) die Stellelemente (311a, b bzw. 311c, d; 331a, b bzw. 331c, d) mit einem Medium beaufschlagt, und,
- ausgehend von zwei übereinander angeordneten, vollständig entleerten Stellelementen (311a, b bzw. 311c, d; 331a, b bzw. 331c, d), zunächst das erste Stellelement und anschließend das zweite Stellelement vollständig befüllt wird, mit jeweils gegensinniger Abfolge der anderen übereinander angeordneten Stellelemente (311c, d bzw. 311a, b; 331c, d bzw. 331a, b).

## Claims

1. A seat with a cushion (1, 11, 21, 310) and a device comprising at least one adjusting element (6, 16, 26, 311a to 311d, 331a to 331d) for generating a tilting motion of the pelvis of a sitting person around a longitudinal axis (7, 207) and/or a transverse axis of the seat cushion (1, 11, 21, 310) in each case with at least one adjusting element (6, 16, 26, 311a to 311d, 331a to 331d) in the right or left or in the front or rear region of the cushion (1, 11, 21, 310),
**characterised in that** the adjusting elements (6, 16, 26, 311a to 311d, 331a to 331d) are disposed in pairs and constructed so that they can carry out an adjusting movement in opposite directions between a bottom (U) and a top (O) position without moving the sitting person up and down.

2. A seat according to claim 1, wherein the cushion has a supporting structure and a padded part,
**characterised in that** the adjusting elements (6) are disposed outside the supporting structure (2) of the seat cushion (1).

3. A seat according to claim 1, wherein the cushion comprises a supporting structure and a padded part,
**characterised in that** the adjusting elements (16) are mounted between the supporting structure (12) and the padded part (13).

4. A seat according to claim 1, wherein the seat cushion comprises a supporting structure and a cushion part,
**characterised in that** the adjusting elements (26) are mounted in the cushion part (23).

5. A seat according to any of the preceding claims,
**characterised in that** the adjusting elements are bladders, roller bellows or the like and operated with a liquid or gaseous medium.

6. A seat according to claim 5,
**characterised in that** the medium for the adjusting elements is provided in two variable-volume working chambers, the volume of the chambers being variable in opposite directions via a drive.

7. A seat according to claim 6,
**characterised in that** the working chambers (42, 43) are formed by a double-acting cylinder (40) and a movable piston (44).

8. A seat according to claim 6,
**characterised in that** the working chambers (62, 63; 72, 73) have flexible walls on which a movable or pivotable element (64 or 74) acts.

9. A seat according to claim 5,
**characterised in that** the medium is moved in reciprocation by a pressure-medium pump (80) immediately between the adjusting elements (86a, 86b).

10. A seat according to claim 9,
**characterised in that** the pressure-medium pump is a rotary vane pump (80).

11. A seat according to any of the preceding claims,
**characterised in that** at least two adjusting elements (311a, b or 311c, d; 331a, b or 331c, d) superposed in the adjustment direction are provided in the right or left or in the front or rear region of the seat cushion (310).

12. A seat according to claim 11,
**characterised in that** the adjusting elements (301; 311a, b or 311c, d; 331a, b or 331c, d) are operated with a gaseous medium and comprise a means (306) for limiting the adjustment travel (s) and operating irrespectively of the pressure (pᵢ) inside the adjusting element (301; 311a, b or 311c, d; 331a, b or 331c, d).

13. A seat according to claim 12,
**characterised in that** the means (306) comprises at least one partition, one belt, one web or the like and opposite wall regions (304, 305) of the adjusting element (301) considered in the adjustment direction, inside the adjusting element (301) are interconnected.

14. A seat according to any of the preceding claims,
**characterised in that** a shut-off valve (89) for preventing an exchange of medium between the adjusting elements (86a, 86b) is provided between the adjusting elements (86a, 86b) of the right or left or the front or rear region of the seat cushion.

15. A seat according to any of the preceding claims,
**characterised in that** the adjusting elements comprise levers (101) for applying the adjusting force (F).

16. A seat according to any of the preceding claims,
**characterised in that** the adjusting elements comprise a spindle drive (91, 92).

17. A seat according to any of the preceding claims,
**characterised in that** the adjusting elements comprise an eccentric drive.

18. A seat according to any of the preceding claims,
**characterised in that** the adjusting elements comprise a scissors-like lifting linkage.

19. A seat according to any of the preceding claims,
**characterised in that** the adjusting elements comprise wedge-shaped elements movable relative to one another.

20. A seat comprising a cushion (201) and at least one means comprising an adjusting element (206) for generating a tilting motion of the pelvis of a sitting person around the longitudinal central axis (207) and/or the transverse axis of the seat cushion,
**characterised in that** the means comprises an adjusting element (206) engaging the seat cushion (201) or a means suspending the seat cushion (201) and the seat cushion (201) is mounted at three points (210, 210; 211) wherein the adjusting element (206) engages in the region of one out of two opposite bearing points (210) and the seat cushion (201) when moved by the adjusting element (206) is tiltable around a longitudinal central axis (207) or a transverse axis situated in the same vertical plane as the third bearing point (211).

21. A method of actuating a seat comprising a cushion and at least one means comprising a movable adjusting element generating a tilting motion of the pelvis of a sitting person around a longitudinal central axis and/or a transverse axis of the seat cushion,
**characterised in that** an adjusting element (86a, 86b) is provided in the r right or left or in the front or rear region of the seat cushion, wherein
- the adjusting elements (86a, 86b) are disposed in pairs,
- a pump (80) pumps a liquid medium between the two adjusting elements (86a, 86b),
- the adjusting elements (86a, 86b) consequently make adjusting motions in opposite directions between a bottom position (L), a middle position (M) and a top position (V), and
- the pump (80) in order to move to the middle position (M) is actuated by a control variable obtained by multiplying a continuously detected variable pump characteristic (N12, N21) corresponding to complete filling of the adjusting elements (86a, 86b) by an invariable factor (F12, F21).

22. A method of actuating a seat comprising a cushion and at least one means comprising a movable adjusting element generating a tilting motion of the pelvis of a sitting person around a longitudinal central axis and/or a transverse axis of the seat cushion,
**characterised in that** superposed adjusting elements (311a, b or 311c, d; 331 a, b or 331 c, d) superposed as considered in the direction of adjustment are provided in the right or left or in the front or rear region of the seat cushion, wherein
- the adjusting elements (311a, b or 311c, d; 331a, b or 331c, d) are associated in pairs,
- a pump (322; 332) supplies the adjusting elements (311a, b or 311c, d; 331a, b or 331c, d) with a medium and
- starting from two superposed completely empty adjusting elements (311a, b or 311c, d; 331a, b or 331c, d), firstly the first adjusting element and then the second adjusting element is completely filled, with the reverse sequence for the other superposed adjusting elements (311c, d or 311a, b; 331c, d or 331a, b).

## Revendications

1. Siège, comportant un coussin de siège (1, 11, 21, 310) et un dispositif comprenant au moins un élément de réglage (6, 16, 23, 311a à 311d, 331a à 331d) pour produire un mouvement de basculement du bassin de la personne assise, autour d'un axe longitudinal médian (7, 207) et/ou un axe transversal du coussin (1, 11, 21, 310), avec chaque fois au moins un élément de réglage (6, 16, 26, 311a à 311d, 331a à 331d) dans la zone droite ou gauche ou avant ou arrière du coussin (1, 11, 21, 310),
**caractérisé en ce que**
les éléments de réglage (6, 16, 26, 311a à 311d, 331a à 331d) sont associés par paires et constitués de manière à pouvoir effectuer des mouvements de réglage en sens opposés entre une position inférieure et une position supérieure (U ou O) sans déplacement vers l'avant ou vers l'arrière de la personne assise.

2. Siège selon la revendication 1, dans lequel le coussin de siège possède une structure porteuse et une partie de rembourrage,
**caractérisé en ce que**
les éléments de réglage (6) sont disposés à l'extérieur de la structure porteuse (2) du coussin de siège (1).

3. Siège selon la revendication 1, dans lequel le coussin de siège possède une structure porteuse et une partie de rembourrage,
**caractérisé en ce que**
les éléments de réglage (16) sont disposés entre la structure porteuse (12) et la partie de rembourrage (13).

4. Siège selon la revendication 1, dans lequel le coussin de siège possède une structure porteuse et une partie de rembourrage,
**caractérisé en ce que**
les éléments de réglage (26) sont disposés dans la partie de rembourrage (23).

5. Siège selon l'une des revendications précédentes,
**caractérisé en ce que**
les éléments de réglage sont constitués par des vessies, des soufflets annelés ou similaires actionnés par un fluide liquide ou gazeux.

6. Siège selon la revendication 5,
**caractérisé en ce que**
le fluide alimentant les éléments de réglage est stocké dans des chambres de travail à volume variable pouvant varier en sens contraires sous l'effet d'un entrainement.

7. Siège selon la revendication 7,
**caractérisé en ce que**
les chambres de travail (42, 43) sont constituées par un cylindre à double effet (40) équipé d'un piston coulissant (44).

8. Siège selon la revendication 6,
**caractérisé en ce que**
les chambres de travail (62, 63 ; 72, 73) présentent des parois flexibles sur lesquelles agit un élément coulissant ou basculant (64 ou 74).

9. Siège selon la revendication 5,
**caractérisé en ce que**
le fluide est déplacé en va et vient entre les éléments de réglage (86a, 86b) par une pompe de pression (80).

10. Siège selon la revendication 9,
**caractérisé en ce que**
la pompe de pression est une pompe à palettes (80).

11. Siège selon l'une quelconque des revendications précédentes,
**caractérisé en ce que**
dans chacune des parties gauche et droite, ou avant et arrière du coussin de siège (310), il est prévu au moins deux éléments de réglage (311a, b et 311c, d ou 331a, b et 331c, d) qui, observés selon la direction de déplacement, sont superposés.

12. Siège selon la revendication 11,
**caractérisé en ce que**
les éléments de réglage (301 ; 311a, b et 311c, d ; 331a, b et 331c, d) sont entrainés par un fluide gazeux et comportent un dispositif (306) de limitation de la course de réglage (s) agissant indépendamment de la pression (pᵢ) régnant à l'intérieur de l'élément de réglage (301 ; 311a, b et 311c, d ; 331a, b et 331c, d).

13. Siège selon la revendication 12,
**caractérisé en ce que**
le dispositif (306) est constitué d'au moins une cloison séparatrice, une bande, une barrette ou similaire, qui à l'intérieur de l'élément de réglage (301) relie des parties de paroi (304, 305) de l'élément de réglage (301) situées face à face quand on les observe selon la direction de déplacement.

14. Siège selon l'une quelconque des revendications précédentes,
**caractérisé en ce qu'**
entre les éléments de réglage (86a, 86b) des zones droite et gauche, ou avant et arrière du coussin de siège, il est prévu une soupape d'arrêt (89) empêchant un échange de fluide entre les éléments de réglage (86a, 86b).

15. Siège selon l'une quelconque des revendications précédentes,
**caractérisé en ce que**
les éléments de réglage comportent un levier (101) permettant d'exercer la force de réglage (F).

16. Siège selon l'une quelconque des revendications précédentes,
**caractérisé en ce que**
les éléments de réglage comportent un mécanisme à vis (91, 92).

17. Siège selon l'une quelconque des revendications précédentes,
**caractérisé en ce que**
les éléments de réglage comportent un entraînement à excentrique.

18. Siège selon une des revendications précédentes,
**caractérisé en ce que**
les éléments de réglage comportent une tringlerie en forme de ciseaux.

19. Siège selon une des revendications précédentes,
**caractérisé en ce que**
les éléments de réglage comportent des éléments en forme de coin, pouvant se déplacer les uns par rapport aux autres.

20. Siège, comportant un coussin de siège (201) et un dispositif comprenant au moins un élément de réglage (206) pour produire le mouvement de basculement du bassin de la personne assise, autour de l'axe longitudinal médian (207) et/ou un axe transversal du coussin,
**caractérisé en ce que**
le dispositif est constitué par un élément de réglage (206) en prise d'un côté avec le coussin de siège (201) ou avec la suspension de ce coussin (201), et qui est monté en trois points (210, 210 ; 211), l'élément de réglage (206) étant en prise dans la zone d'un des deux points de montage (210) situés face à face et le coussin (201), quand on l'actionne, pouvant basculer sous l'action de l'élément de réglage (206), autour d'un axe longitudinal médian (207) ou d'un axe transversal situé dans un même plan vertical que le troisième point de montage (211).

21. Procédé pour commander un siège comportant un coussin de siège et un dispositif comprenant au moins un élément de réglage et produisant un mouvement de basculement du bassin de la personne assise, autour d'un axe longitudinal et/ou un axe transversal du coussin,
**caractérisé en ce qu'**
il est prévu dans chacune des parties droite et gauche, ou des parties avant et arrière du coussin, un élément de réglage (86a, 86b), selon lequel
- les éléments de réglage (86a, 86b) sont associés par paires,
- une pompe (80) fait circuler un agent liquide entre les deux éléments de réglage (86a, 86b),
- les éléments de réglage (86a, 86b) exécutent ainsi des mouvements de réglage de sens opposés, entre une position inférieure, une position moyenne et une position supérieure (L, M, V), et
- la pompe (80) pour conduire à la position moyenne (M) est commandée par une grandeur de commande qui est obtenue à partir d'une valeur de caractéristique de pompe (N12, N21), saisie en continu et qui correspond au remplissage total des éléments de réglage (86a, 86b), en multipliant cette valeur par un facteur invariable (F12, F21).

22. Procédé pour commander un siège comportant un coussin de siège et un dispositif comprenant au moins un élément de réglage et produisant un mouvement de basculement du bassin de la personne assise, autour d'un axe longitudinal et/ou d'un axe transversal du coussin,
**caractérisé en ce qu'**
il est prévu dans chacune des parties droite et gauche, ou des parties avant et arrière du coussin deux éléments de réglage (311a, b et 311c, d ; ou 331a, b et 331c, d) qui, observés selon la direction de déplacement, sont superposés, selon lequel :
- les éléments de réglage (311a, b et 311c, d ; 331a, b et 331c, d) sont associés par paires,
- une pompe (322 ; 332) actionne par un agent liquide les éléments de réglage (311a, b et 311c, d ; 331a, b et 331c, d), et
- partant de deux éléments de réglage superposés et totalement vidés (331a, b et 311c, d ; 331a, b et 331c, d) d'abord le premier élément de réglage, puis le second sont totalement remplis, avec chaque fois évolution en sens contraire de l'autre élément de réglage (311c, d et 311a, b ; 331c, d et 331a, b) avec lequel il est en superposition.
